# EUROPEAN PATENT APPLICATION

(11) **EP 4 782 426 A1**
(43) Date of publication of application: **29.07.2026**
(21) Application number: 24859011.9
(22) Date of filing: 29.03.2024
(51) Int. Cl.: C04B 35/626

(54) **METHOD AND SYSTEM FOR PREPARING CERAMIC RAW MATERIAL**

(30) Priority: 30.08.2023 WO PCT/JP2023/031646
(71) Applicant: NGK Insulators, Ltd., Nagoya-shi, Aichi 467-8530 (JP)
(72) Inventor: KATO YAMATE, Hitomi, Nagoya-shi, Aichi 467-8530 (JP); KIMATA, Ryosuke, Nagoya-shi, Aichi 467-8530 (JP); WATANABE, Morimichi, Nagoya-shi, Aichi 467-8530 (JP)
(74) Representative: Mewburn Ellis LLP
(86) International application number: PCT/JP2024/012942
(87) International publication number: WO 2025/046962

(57) **Abstract**

Each of one or more types of ceramic raw materials, a grinding medium, and a solvent put in a container are mixed by a rotation-revolution mixer. Alternatively, a production system including a plurality of apparatuses including such a rotation-revolution mixer or another apparatus and a robot system including one or more robots for at least one apparatus among the plurality of apparatuses are operated by a computer according to manufacturing method recipe data representing a ceramic manufacturing method recipe, thereby automatically performing one or more steps among a plurality of steps for preparation of a ceramic raw material.

## Description

### Technical Field

The present invention generally relates to preparation of a ceramic raw material.

### Background Art

A ceramic raw material is prepared in the process of producing a ceramic (ceramic material), and the method disclosed in PTL 1 is known as a method for preparing a ceramic raw material. The "ceramic" refers to a generic term for inorganic materials composed of polycrystals, but may be a metal or an organic compound. In addition, the ceramic may be composed of a single crystal or may be amorphous such as glass. The "ceramic" in the present specification may be polycrystalline, single crystal, amorphous, or a mixture thereof.

### Citation List

### Patent Literature

PTL 1: Japanese Patent Application Laid-open No. 2022-006662

### Summary of Invention

### Technical Problem

In creation of a ceramic, it is desirable to be able to mix the ceramic raw material at high speed, in other words, to be able to shorten the time required for mixing the ceramic raw material.

### Solution to Problem

Each of one or more types of ceramic raw materials, a grinding medium, and a solvent, which are put in a container, are mixed by a rotation-revolution mixer. Alternatively, a production system including a plurality of apparatuses including such a rotation-revolution mixer or another apparatus and a robot system including one or more robots for at least one apparatus among the plurality of apparatuses are operated by a computer according to manufacturing method recipe data representing a ceramic manufacturing method recipe, thereby automatically performing at least one or more steps among a plurality of steps for preparation of a ceramic raw material.

### Advantageous Effects of Invention

It is possible to mix the ceramic raw material at high speed.

### Brief Description of Drawings

[Fig. 1]

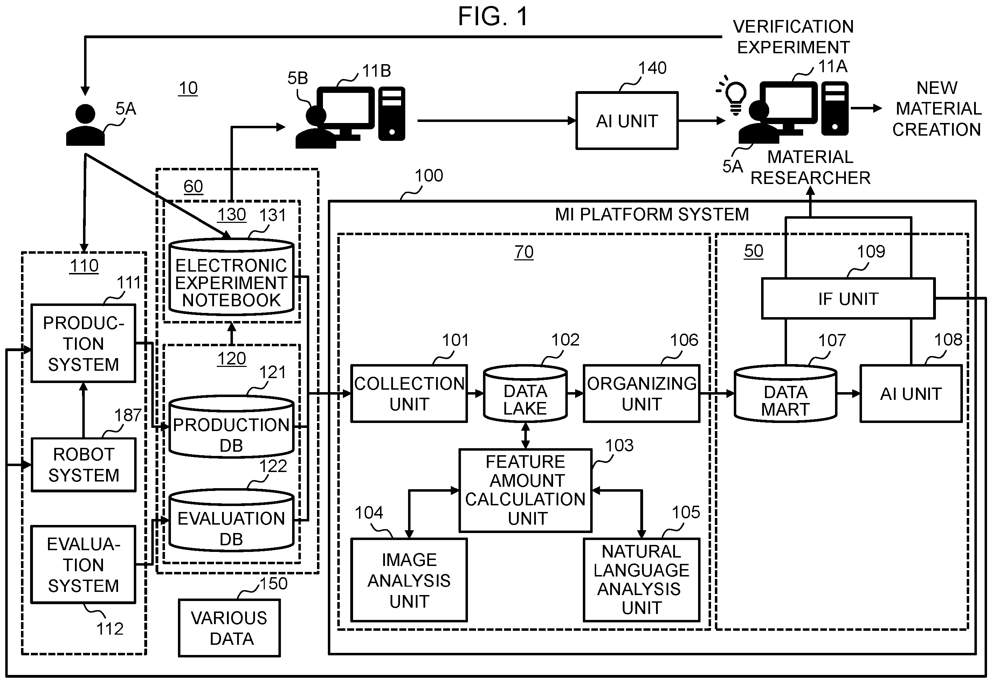

   Fig. 1 illustrates an example of a system configuration according to an embodiment of the present invention.
[Fig. 2]

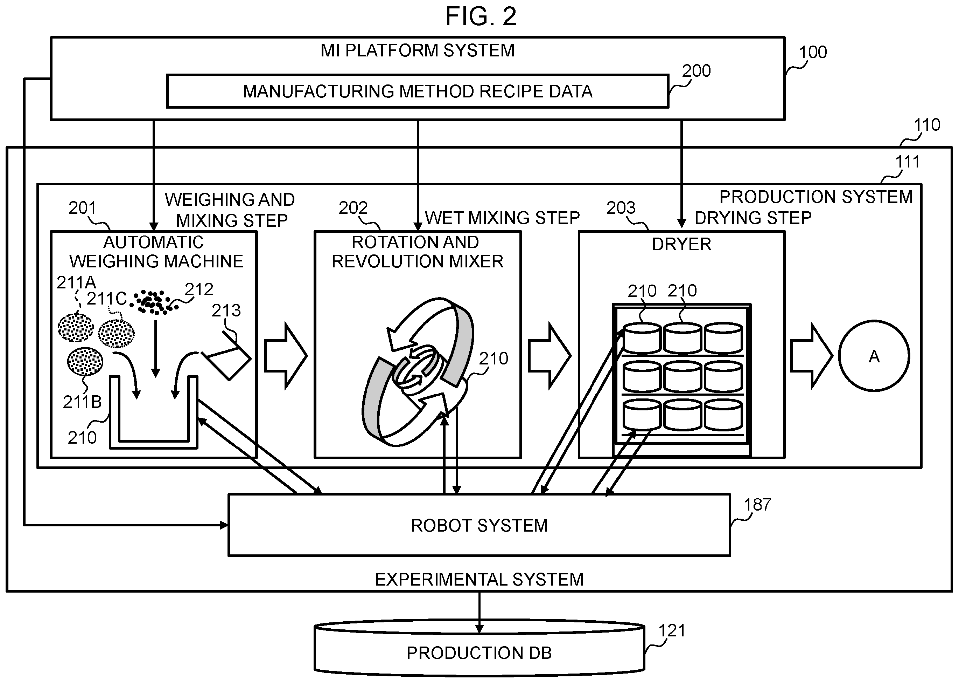

   Fig. 2 illustrates a part of a configuration of an experimental system and a flow of preparation of a ceramic raw material.
[Fig. 3]

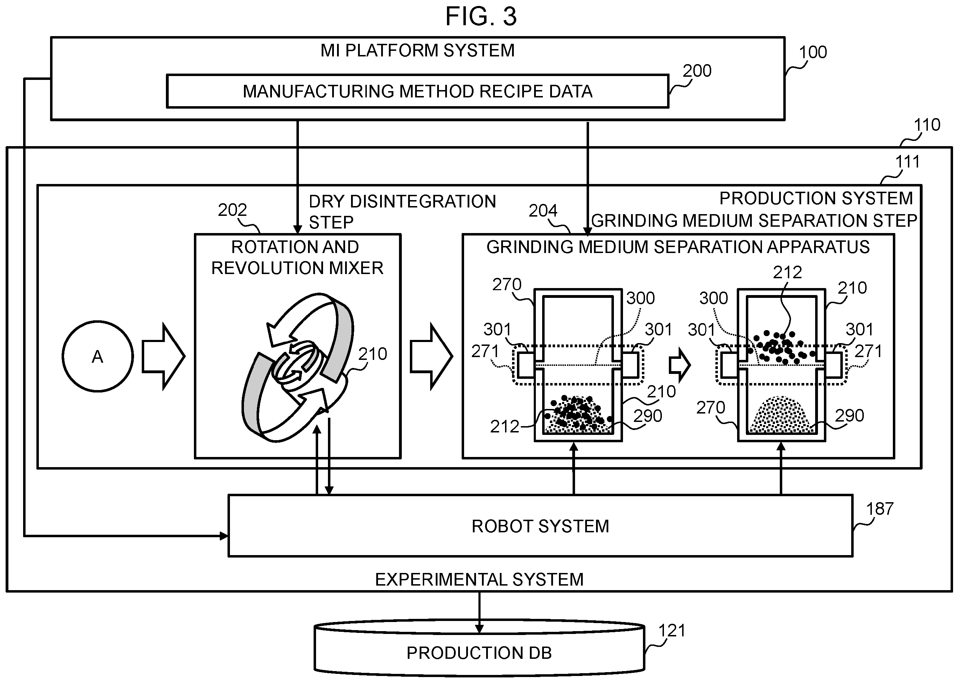

   Fig. 3 illustrates the rest of the configuration of the experimental system and the flow of preparation of a ceramic raw material.

### Description of Embodiments

In the following description, an "interface apparatus" may be one or more interface devices. The one or more interface devices may be at least one of the following:
- One or more input/output (I/O) interface devices. The I/O (input/output) interface device is an interface device for at least one of an I/O device or a remote display computer. The I/O interface device for the display computer may be a communication interface device. The at least one I/O device may be either a user interface device, for example, an input device such as a keyboard and a pointing device, or an output device such as a display device.
- One or more communication interface devices. The one or more communications interface devices may be one or more communication interface devices of the same kind (for example, one or more network interface card (NIC)), or may be two or more communication interface devices of different kinds (for example, an NIC and a host bus adapter (HBA)).

In addition, in the following description, a "memory" is one or more memory devices that are an example of one or more storage devices, and may typically be a main storage device. At least one memory device in the memory may be a volatile memory device or a non-volatile memory device.

In addition, in the following description, a "persistent storage apparatus" may be one or more persistent storage devices that are an example of one or more storage devices. Typically, the persistent storage device may be a non-volatile storage device (for example, an auxiliary storage device), and specifically, for example, may be a hard disk drive (HDD), a solid state drive (SSD), a non-volatile memory express (NVME) drive, or a storage class memory (SCM).

In addition, in the following description, a "storage apparatus" may be the memory and at least a memory of the persistent storage apparatus.

In addition, in the following description, a "processor" may be one or more processor devices. At least one processor device may typically be a microprocessor device such as a central processing unit (CPU), but may be another type of processor device such as a graphics processing unit (GPU). The at least one processor device may be single-core or multicore. The at least one processor device may be a processor core. The at least one processor device may be a processor device in a broad sense, such as a circuit (for example, a field-programmable gate array (FPGA), a complex programmable logic device (CPLD), or an application specific integrated circuit (ASIC)) that is a set of gate arrays in a hardware description language that performs some or all of processing.

In addition, in the following description, a function may be described using an expression "yyy unit", but the function may be realized by executing one or more computer programs by a processor, may be realized by one or more hardware circuits (for example, FPGA or ASIC), or may be realized by a combination thereof. In a case where the function is realized by executing the program by the processor, determined processing is appropriately performed using the storage apparatus and/or the interface apparatus, and thus, the function may be at least a part of the processor. The processing described with the function as a subject may be processing performed by the processor or an apparatus including the processor. The program may be installed from a program source. The program source may be, for example, a program distribution computer or a computer-readable recording medium (for example, a non-transitory recording medium). The description of each function is an example, and a plurality of functions may be integrated into one function or one function may be divided into a plurality of functions.

In addition, in the following description, in a case where elements of the same kind are described without being distinguished, a common reference numeral among reference numerals may be used, and in a case where elements of the same kind are distinguished, a reference numeral may be used.

Hereinafter, an embodiment of the present invention will be described with reference to the drawings. In the following description, "MI" is an abbreviation for materials informatics, and "DB" is an abbreviation for database.

Fig. 1 illustrates an example of a system configuration according to an embodiment of the present invention. In the description of the present embodiment, at least a part of the description disclosed in unpublished prior applications PCT/JP2023/009174 and PCT/JP2023/009175 by the same applicant as the present application can be incorporated. Hereinafter, description of Fig. 1 will be briefly made.

A material creation support system 10 includes an experimental system 110, a data acquisition unit 60, an MI platform system 100, and a researcher terminal 11A. The MI platform system 100 includes a data presentation unit 50 and a data conversion unit 70.

The data presentation unit 50 includes an artificial intelligence (AI) unit 108 and an interface (IF) unit 109. The AI unit 108 performs learning of a machine learning model and inference using the machine learning model. For example, the AI unit 108 outputs an inference result obtained by inputting organized data acquired from a data mart 107 to the machine learning model to the IF unit 109 in response to an instruction from the IF unit 109. The IF unit 109 receives an inquiry from the researcher terminal 11A, and presents target data to the researcher terminal 11A in response to the inquiry. The researcher terminal 11A is an information processing terminal (for example, a personal computer or a smartphone) of a material researcher 5A (an example of a user). The researcher terminal 11A is an example of a transmission source of the inquiry of the target data and an example of a presentation destination of the target data. In the case of receiving the inquiry from the researcher terminal 11A (or periodically), the IF unit 109 presents a target represented by the target data (the organized data acquired from the data mart 107 and/or data based on the inference result obtained by instructing the AI unit 108). The target to be presented may be, for example, a manufacturing method recipe or a material property. In the present embodiment, the "manufacturing method recipe" means a method of creating a material and may typically include a material composition and/or a synthesis process. The "material composition" may be, for example, a preparation composition or the like, and the "synthesis process" may be a raw material type (for example, a difference in particle size), a process condition, or the like. The manufacturing method recipe may include a material development strategy. The "material property" means a property exhibited by a substance (for example, a structure) as a material, and specifically, for example, may include one or a plurality of property items (for example, strength, coefficient of thermal expansion, and the like) and a value (typically, a numerical value) for each of the one or the plurality of property items.

The material researcher 5A creates a new material on the basis of the presented target data and performs an experiment based on the target data. The presentation destination (transmission destination) of the target data may be a system such as the experimental system 110 instead of or in addition to the researcher terminal 11A.

An experiment using the experimental system 110 is performed on the basis of the presented target. The experimental system 110 may include a ceramic production system 111 (for example, an atmospheric firing furnace), a robot system 187 for the production system 111, and a ceramic evaluation system 112 (for example, an apparatus for evaluating a coefficient of thermal expansion). Experiment data is output from experimental apparatuses such as the production system 111 and the evaluation system 112. The output experiment data is transmitted to and stored in a data server 120. In addition, a combinatorial experiment is an example of an experiment, and at least one of a high-throughput experiment, an automatic experiment using a robot, or an experiment mainly performed by manual work may be adopted instead of or in addition to the combinatorial experiment. The production system 111 and the robot system 187 may be operated by the MI platform system 100 according to manufacturing method recipe data.

The data acquisition unit 60 includes a data server 120 and an experiment notebook unit 130. The data server 120 includes, as DBs where the experiment data from the experimental system 110 is stored, a production DB 121 in which the experiment data from the production system 111 is stored, and an evaluation DB 122 in which the experiment data from the evaluation system 112 is stored. The "experiment data" may be data related to an experiment such as an experiment summary, details, results, or evaluation. The experiment notebook unit 130 manages the experiment data acquired from the DB managed by the data server 120 as an electronic experiment notebook 131.

The data conversion unit 70 includes a collection unit 101, a feature amount calculation unit 103, an image analysis unit 104, a natural language analysis unit 105, and an organizing unit 106. The collection unit 101 collects the experiment data from the electronic experiment notebook 131 and the DBs of the data server 120, shapes the collected experiment data, and stores the shaped experiment data in a data lake 102, or collects various data 150 and stores at least some data of the various data 150 in the data lake 102. The feature amount calculation unit 103 calculates feature amounts of one or more predetermined types of data in the shaped experiment data. For example, the one or more types of data may be image data and text data. The image data is analyzed by the image analysis unit 104, and the feature amount calculation unit 103 calculates the feature amount of the image data on the basis of an analysis result. The text data is subjected to text mining by the natural language analysis unit 105, and the feature amount calculation unit 103 calculates the feature amount of the text data on the basis of a result of the text mining. The organizing unit 106 organizes the data lake 102 into one or a plurality of data marts 107 as a data set conforming to a predetermined condition.

According to the system illustrated in Fig. 1, it can be expected that a cycle of presentation of the target data → the experiment → collection of the experiment data → conversion of the experiment data into the organized data → presentation of the target data based on the organized data is performed with high efficiency and at high speed. For example, the organized data based on the experiment data collected and shaped in the MI platform system 100 is prepared, and the target data is presented to the material researcher 5A by the MI platform system 100 on the basis of the organized data. In addition, the data may be presented to the material researcher 5A not via the MI platform system 100. For example, another material researcher 5B may acquire the experiment data from the electronic experiment notebook 131 using a trainee terminal 11B, organize the experiment data, and input the organized experiment data to the AI unit 140. The AI unit 140 may be realized outside (or inside) the trainee terminal 11B.

The manufacturing method recipe data representing a ceramic manufacturing method recipe is provided as the target data from the MI platform system 100, and a ceramic (ceramic material) is produced according to a manufacturing method recipe represented by the manufacturing method recipe data, and the experiment is performed. The ceramic production according to the manufacturing method recipe includes preparation of a ceramic raw material. Although at least some steps in the preparation of the ceramic raw material may be performed manually (for example, by the material researcher 5A), in the present embodiment, the MI platform system 100 (an example of a computer system) automatically performs a plurality of steps for preparing the ceramic raw material by operating the production system 111 and the robot system 187 according to the manufacturing method recipe data. As a result, the ceramic raw material can be prepared at high speed. At least one or more of the plurality of steps may be automatically performed. Further, instead of generating the manufacturing method recipe data, the MI platform system 100 may receive the manufacturing method recipe data from an external system and operate the production system 111 and the robot system 187 according to the received manufacturing method recipe data. That is, a computer system such as the MI platform system 100 may generate or receive the manufacturing method recipe data and operate the production system 111 and the robot system 187 according to the generated or received manufacturing method recipe data.

Figs. 2 and 3 illustrate a configuration of the experimental system 110 and a flow of the preparation of the ceramic raw material.

In the production system 111, the ceramic may be produced according to the manufacturing method recipe indicated by manufacturing method recipe data 200 through steps such as raw material mixing (preparation of the ceramic raw material) → molding (molding of ceramic powder) → firing → processing. In the production system 111, at least the illustrated raw material mixing (preparation of the ceramic raw material) is performed.

The plurality of steps for preparing the ceramic raw material are the following five steps. In the following five steps, a second container may be a first container or a container different from the first container. A third container may be the second container or a container different from the second container. A fourth container may be the third container or a container different from the third container. A fifth container may be the fourth container or a container different from the fourth container. A sixth container may be a container different from the fifth container.
(A) A weighing and mixing step of weighing each of one or more types of ceramic raw materials 211, a solvent 213, and a grinding medium 212, and putting the weighed one or more types of ceramic raw materials 211, the weighed solvent 213, and the weighed one or more (typically a plurality of) grinding media 212 into the first container.
(B) A wet mixing step of wet-mixing the one or more types of ceramic raw materials 211 in the second container containing the one or more types of ceramic raw materials 211, the solvent 213, and the one or more grinding media 212.
(C) A drying step of drying a slurry (the raw material 211 and the solvent 213) obtained by the wet mixing in the third container.
(D) A dry disintegration step of disintegrating a dried raw material (a raw material 290 (typically, a mixed raw material) in which the solvent 213 is volatilized from the slurry) in the fourth container.
(E) A grinding medium separation step of separating the one or more grinding media 212 from the disintegrated raw material 290 in the fifth container to obtain a ceramic powder in the sixth container.

By such five steps, the ceramic raw material can be prepared at high speed. In the present embodiment, all of the five steps do not need to be manually performed, but at least one of the five steps may be manually performed (for example, at least a part of the operation of the robot system 187 may be manually performed). Even if at least one step is manually performed, the ceramic raw material can be prepared at high speed (for example, can be prepared at higher speed than in comparative examples and modifications to be described below). High-speed preparation of the ceramic raw material contributes to creation of a ceramic (ceramic material) at high speed. Specifically, for example, since the ceramic raw material is prepared at high speed, the experiment using the ceramic raw material can be performed at high speed, and as a result, it is expected that a large amount of experiment data is accumulated in a short period, and learning and/or inference of a machine learning model using the manufacturing method recipe and the material properties as input and output is performed using the large amount of experiment data. That is, it is expected to further increase the speed and efficiency of the cycle of presentation of the target data → the experiment → collection of the experiment data → learning/inference of the machine learning model using the experiment data → presentation of the target data.

In the present embodiment, each of the second to fifth containers is the first container, and the first container is a heat-resistant container 210. That is, in the present embodiment, the steps can be performed until the start of the grinding medium separation step without replacing the container. Therefore, it is possible to proceed with the steps up to the start of the grinding medium separation step without transferring contents of the container, thereby contributing to high-speed preparation of the ceramic raw material. In addition, since the container is placed in a dryer 203 as will be described below (since the container can be used even if the temperature for drying the slurry is increased), the container needs to have heat resistance, and for example, the heat-resistant container 210 made of Teflon (registered trademark), nylon, or the like is preferable.

The robot in the robot system 187 may be a cooperative robot or another robot (for example, an industrial robot). Furthermore, the robot may be prepared for each apparatus in the production system 111, or one robot may be common to two or more apparatuses in the production system 111. The robot in the robot system 187 receives a request from the MI platform system 100 directly or indirectly via, for example, a communication network, and operates according to the received request. In a case where the request is indirectly accepted, a control apparatus of at least one robot may accept the request from the MI platform system 100 and issue a request based on the request to the at least one robot. In a case where the request is directly accepted, the request may be accepted from the MI platform system 100 not via such a control apparatus. Hereinafter, in order to simplify the description, it is assumed that the request according to the manufacturing method recipe data 200 is accepted from the MI platform system 100 for any robot in the robot system 187 regardless of whether it is direct request acceptance or indirect request acceptance. In addition, it is assumed that the robot system 187 operates even in a case where any robot of one or more robots in the robot system 187 operates. The robot may transmit a notification (for example, a notification of status such as completion of the request) to the MI platform system 100 at timing such as the start or completion of the operation in accordance with the request.

The plurality of apparatuses in the production system 111 include an automatic weighing machine 201, a rotation-revolution mixer 202 (an example of a wet mixing apparatus and a disintegration apparatus), a dryer 203, and a grinding medium separation apparatus 204. Each of these apparatuses 201 to 204 receives the request from the MI platform system 100 directly or indirectly via, for example, a communication network, and operates according to the received request. In a case where the request is indirectly accepted, a control apparatus of at least one apparatus of the apparatuses 201 to 204 may accept the request from the MI platform system 100 and issue a request based on the request to the at least one apparatus. In a case where the request is directly accepted, the request may be accepted from the MI platform system 100 not via such a control apparatus. Hereinafter, in order to simplify the description, it is assumed that the request according to the manufacturing method recipe data 200 is accepted from the MI platform system 100 for any apparatus in the production system 111 regardless of whether it is direct request acceptance or indirect request acceptance. The apparatus in the production system 111 may transmit a notification (for example, a notification of status such as completion of the request) to the MI platform system 100 at timing such as the start or completion of the operation in accordance with the request.

In the weighing and mixing step, the robot system 187 sets the heat-resistant container 210 in the automatic weighing machine 201. The automatic weighing machine 201 weighs each of the one or more ceramic raw materials 211, the solvent 213, and the grinding media 212, and puts the weighed one or more ceramic raw materials 211, the weighed solvent 213, and the weighed one or more grinding media 212 in the heat-resistant container 210, according to one or more types of parameter values related to weighing and/or mixing included in the manufacturing method recipe represented by the manufacturing method recipe data 200. The robot system 187 takes out the heat-resistant container 210 from the automatic weighing machine 201. According to the example illustrated in Fig. 2, there are three types of ceramic raw materials 211A, 211B, and 211C.

The "one or more parameter values related to weighing and/or mixing included in the manufacturing method recipe" may be specified in the request received by the automatic weighing machine 201 from the MI platform system 100. The "one or more parameter values" may include at least one of a raw material name and a weight for each type of the ceramic raw materials 211, a name and a weight of the solvent 213, or a name and a weight of the grinding medium 212. The solvent 213 may be an alcohol such as isopropyl alcohol (IPA). The grinding medium 212 needs to have heat resistance because it is put in the dryer 203 as will be described below, and for example, the one or more grinding media 212 may be at least one of alumina balls, zirconia balls, or nylon balls. Incidentally, the type of the solvent 213 is not limited, but ethanol or IPA having high dispersibility is preferable as the solvent 213 in a case where the material has cohesiveness. In addition, the type of the grinding medium 212 is not limited, but examples of the grinding medium 212 include stainless steel, steel, carbon steel, chromium steel, tungsten carbide balls, silicon nitride, natural silica stone, SiC, agate (silicon oxide), polyurethane, Teflon, and quartz, and nylon balls are preferable particularly in a case where it is desired to avoid contamination with impurities.

In the wet mixing step, the robot system 187 sets the heat-resistant container 210 (heat-resistant container 210 containing the one or more types of ceramic raw materials 211, the solvent 213, and the one or more grinding media 212) taken out in the weighing and mixing step in the rotation-revolution mixer 202. The rotation-revolution mixer 202 wet-mixes (stirs) the one or more types of ceramic raw materials 211 in the heat-resistant container 210 according to one or more parameter values related to wet mixing included in the manufacturing method recipe. The robot system 187 takes out the heat-resistant container 210 from the rotation-revolution mixer 202. In this step, an opening of heat-resistant container 210 may or may not be covered with a lid.

The "one or more parameter values related to wet mixing included in the manufacturing method recipe" may be specified in the request received by the rotation-revolution mixer 202 from the MI platform system 100. The "one or more parameter values" may include at least one of a rotation speed (for example, a rotation speed per unit time) of the rotation-revolution mixer 202 or a rotation time length. Although the wet mixing may be performed by a ball mill or the like instead of the rotation-revolution mixer 202, adoption of the rotation-revolution mixer 202 as a wet mixing apparatus contributes to high-speed preparation of the ceramic raw material.

In the drying step, the robot system 187 sets the heat-resistant container 210 taken out in the wet mixing step in the dryer 203. The dryer 203 dries the slurry in the heat-resistant container 210 according to one or more parameter values related to drying included in the manufacturing method recipe. That is, the slurry is dried together with the grinding medium 212. The robot system 187 takes out the heat-resistant container 210 from the dryer 203. By drying the slurry and the grinding medium 212 together, dry disintegration is possible in the next step as they are (without the need to transfer the contents of the container). The drying method may be any method as long as the solvent can be removed, and for example, any one of nitrogen gas drying, vacuum drying, atmospheric drying, microwave drying, induction heating drying, heating drying using a hot plate, or the like may be adopted.

The "one or more parameter values related to drying included in the manufacturing method recipe" may be specified in the request received by the dryer 203 from the MI platform system 100. The "one or more parameter values" may be all or part of those related to driving of the dryer 203, and may include at least one of, for example, a drying time, a drying temperature (for example, the temperature at each time from the start of drying), the number of heat-resistant containers 210 to be set, a carrier gas, a gas flow rate, or a degree of vacuum. Further, the dryer 203 may have a space in which the plurality of heat-resistant containers 210 can be placed, and thus the drying step may be performed after the weighing and mixing step and the wet mixing step are performed for the plurality of heat-resistant containers 210. Both the weighing and mixing step and the wet mixing step may be performed in parallel for the plurality of heat-resistant containers 210.

In the dry disintegration step, the robot system 187 sets the heat-resistant container 210 taken out in the drying step in the rotation-revolution mixer 202. The rotation-revolution mixer 202 disintegrates the raw material in the heat-resistant container 210 according to one or more parameter values related to dry disintegration included in the manufacturing method recipe. The robot system 187 takes out the heat-resistant container 210 from the rotation-revolution mixer 202. In this step, an opening of heat-resistant container 210 may or may not be covered with a lid.

The "one or more parameter values related to dry disintegration included in the manufacturing method recipe" may be specified in the request received by the rotation-revolution mixer 202 from the MI platform system 100. The "one or more parameter values" may include at least one of a rotation speed (for example, a rotation speed per unit time) of the rotation-revolution mixer 202 or a rotation time length. In addition, the dry disintegration may be performed by another disintegration apparatus instead of the rotation-revolution mixer 202, but adoption of the rotation-revolution mixer 202 as the disintegration apparatus contributes to high-speed preparation of the ceramic raw material. In addition, the rotation-revolution mixer 202 as the disintegration apparatus may be prepared separately from the rotation-revolution mixer 202 as the wet mixing apparatus. However, since the rotation-revolution mixer 202 performs wet mixing and disintegration, apparatus resources can be saved.

In the grinding medium separation step, the robot system 187 sets the heat-resistant container 210 taken out in the dry disintegration step in the grinding medium separation apparatus 204. The disintegrated raw material 290 and the one or more grinding medium 212 are mixed in heat-resistant container 210. The grinding medium separation apparatus 204 separates the one or more grinding media 212 from the disintegrated raw material 290 in the heat-resistant container 210. As a result, the ceramic powder that is the disintegrated raw material 290 enters a receiving container 270 (an example of the sixth container). The robot system 187 takes out the receiving container 270 from the grinding medium separation apparatus 204. In this step, in a case where a lid is put on the opening of the taken out heat-resistant container 210, the robot system 187 may remove the lid, and then set the heat-resistant container 210 in the grinding medium separation apparatus 204. In addition, the grinding medium separation apparatus 204 is not provided, and the above-described operation of the grinding medium separation apparatus 204 may be performed by the robot system 187.

Specifically, in the grinding medium separation step, the robot system 187 sets a jig 271 having a net 300 in the heat-resistant container 210 and the receiving container 270 such that the net 300 is sandwiched between the opening of the heat-resistant container 210 and the opening of the receiving container 270. At this point, the receiving container 270 is on the heat-resistant container 210. The jig 271 fixes the heat-resistant container 210 and the receiving container 270. For example, the jig 271 has, on a peripheral edge of net 300, a fixing member 301 on which at least a part of an opening peripheral edge (for example, a flange) of the heat-resistant container 210 and at least a part of an opening peripheral edge (for example, a flange) of the receiving container 270 are set. The robot system 187 or the grinding medium separation apparatus 204 vertically reverses the heat-resistant container 210 and the receiving container 270 fixed to the jig 271. That is, when the receiving container 270 is placed under the heat-resistant container 210 with the net 300 interposed therebetween, the grinding medium 212 falls on the net 300, and the disintegrated raw material 290 falls into the receiving container 270 as the ceramic powder through the net 300. In order to increase separation efficiency, the robot system 187 or the grinding medium separation apparatus 204 may apply vibration to the heat-resistant container 210 fixed to the jig 271. The net 300 is a sieve, a filter, a mesh, or the like, and is an example of means for physically separating the one or more grinding media 212 from the disintegrated raw material 290. Therefore, the size of the mesh is set such that the grinding medium 212 cannot pass in any direction. The material of the net 300 (sieve, filter, mesh, or the like) is not limited as long as it can separate the grinding media, and for example, the material may be stainless steel, nylon, sunline, polyamide, polyester, fluorine-based resin, or the like.

As described above, the drying step is performed after the wet mixing step, and then the dry disintegration step and the grinding medium separation step are performed, whereby the ceramic raw material can be prepared at high speed.

Data representing results of operations in the robot system 187 and the production system 111 and actual contents of the raw material mixing (for example, an actual weighing value, a drying time, a start time and an end time of each step, and the like) are recorded in the production DB 11 by at least one of the robot system 187, the production system 111, or another apparatus. At least a part of the data may be a component of the experiment data.

The heat-resistant container 210 and/or the receiving container 270 may have a label for container identification. This allows the container 210 or 270 (specifically, for example, the contents of the container 210 or 270) to be identified from the label. As the label, for example, the manufacturing method recipe or a summary thereof may be recorded instead of or in addition to a container ID.

As a comparative example, there is a ceramic raw material preparation method including the following six steps.
(1) A weighing and mixing step of manually weighing each of one or more types of ceramic raw materials, a solvent, and a grinding medium, and manually putting the weighed one or more ceramic raw materials, the weighed solvent, and the weighed one or more grinding media into a first container.
(2) A wet mixing step of manually setting a second container containing the one or more types of ceramic raw materials, the solvent, and the one or more grinding media in a wet mixing apparatus (for example, a ball mill), wet-mixing the second container containing the one or more ceramic raw materials, the solvent, and the one or more grinding media by the wet mixing apparatus, and manually taking out the second container from the wet mixing apparatus.
(3) A grinding medium slurry separation step of manually setting a third container having the one or more grinding media and a slurry obtained by wet mixing in a grinding medium slurry separation apparatus, separating the one or more grinding media from the slurry by the grinding medium slurry separation apparatus to obtain the slurry in a fourth container, and manually removing the fourth container from the grinding medium slurry separation apparatus.
(4) A drying step of manually setting a fifth container having the slurry in a dryer, drying the slurry in the fifth container with the dryer, and manually taking out the fifth container from the dryer.
(5) A pulverization step of manually putting a raw material as a result of volatilization of the solvent from the slurry by drying in a mortar and pulverizing the raw material using a pestle.
(6) A sieving step of manually transferring the pulverized raw material from the mortar to a sieve, and manually rubbing the pulverized raw material with a spatula or other members to the sieve to obtain a ceramic powder.

In this comparative example, the second container may be the first container or a container different from the first container, and the third container may be the second container or a container different from the second container (that is, the first container may be used until the start of the grinding medium slurry separation step). The fourth container is a container different from the third container. The fifth container may be the fourth container or a container different from the fourth container. The mortar is a container different from the fifth container.

As described above, in the comparative example, unlike the embodiment, it is essential to replace the container a plurality of times, and manual work is essential.

There may be a modification in which at least a part of the six steps in the above-described comparative example is automated. Specifically, for example, the plurality of apparatuses in the production system 111 may include an automatic weighing machine, a wet mixing apparatus, a grinding medium slurry separation apparatus, a dryer, a pulverization apparatus, and a sieving apparatus. The plurality of steps may be the following six steps. In addition, the automatic weighing machine to be described below may be the same as the automatic weighing machine 201, and at least a part of the robot system may be the same as at least a part of the robot system 187.
(a) A weighing and mixing step of setting the first container in the automatic weighing machine by the robot system, weighing each of the one or more types of ceramic raw materials, the solvent, and the grinding medium, and putting the one or more types of ceramic raw materials, the solvent, and the one or more grinding media weighed into the first container, by the automatic weighing machine according to one or more parameter values related to weighing and/or mixing included in the manufacturing method recipe, and taking out the first container from the automatic weighing machine by the robot system.
(b) A wet mixing step of setting the second container containing the one or more types of ceramic raw materials, the solvent, and the one or more grinding media in the wet mixing apparatus (for example, a ball mill) by the robot system, wet-mixing the second container containing the one or more types of ceramic raw materials, the solvent, and the one or more grinding media according to one or more parameter values related to wet mixing included in the manufacturing method recipe by the wet mixing apparatus, and taking out the second container from the wet mixing apparatus by the robot system.
(c) A grinding medium slurry separation step of setting the third container having the one or more grinding media and the slurry obtained by wet mixing in the grinding medium slurry separation apparatus by the robot system, separating the one or more grinding media from the slurry according to one or more parameter values related to grinding medium slurry separation included in the manufacturing method recipe by the grinding medium slurry separation apparatus to obtain the slurry in the fourth container, and taking out the fourth container from the grinding medium slurry separation apparatus by the robot system.
(d) A drying step of setting the fifth container having the slurry in the dryer by the robot system, drying the slurry in the fifth container by the dryer according to one or more parameter values related to drying included in the manufacturing method recipe, and taking out the fifth container from the dryer by the robot system.
(e) A pulverization step of setting a sixth container (for example, a mortar) having the raw material as a result of volatilization of the solvent from the slurry by drying in the pulverization apparatus by the robot system, pulverizing the raw material according to one or more parameter values related to pulverization included in the manufacturing method recipe and a captured image of the raw material in the sixth container by the pulverization apparatus, and taking out the sixth container from the pulverization apparatus by the robot system.
(f) A sieving step of setting a seventh container in the sieving apparatus by the robot system, and obtaining the ceramic powder in the seventh container by sieving the raw material (for example, rubbing the pulverized raw material with a sieve with a spatula or other member) according to one or more parameter values related to sieving included in the manufacturing method recipe and a captured image of the pulverized raw material (for example, the raw material on the sieve) by the sieving apparatus.

In this modification, the second container may be the first container or a container different from the first container, and the third container may be the second container or a container different from the second container (that is, the first container may be used until the start of the grinding medium slurry separation step). The fourth container is a container different from the third container. The fifth container may be the fourth container or a container different from the fourth container. The sixth container is a container different from the fifth container, and the seventh container is a container different from the sixth container. Even in the modification, unlike the embodiment, it is necessary to replace the container a plurality of times.

Furthermore, in the modification, in the pulverization step and the sieving step, it is desirable to refer to visible information for pulverization or sieving (for example, rubbing the mortar or spatula, bringing powder close to the end toward the center, or the like) of a portion where the powder is accumulated, and as the visible information, an image captured by a camera is referred to, and the pulverization step and the sieving step are performed. In the embodiment, it is not necessary to refer to such visible information (for example, a captured image), and thus, it can be expected that the configurations and functions of the apparatuses for implementing the steps are simplified as compared with the comparative example and the modification.

Although one embodiment has been described above, this is an example for describing the present invention, and it is not intended to limit the scope of the present invention only to this embodiment. The present invention can be carried out in various other modes.

For example, automatically performing at least one or more steps among a plurality of steps for preparation of a ceramic raw material by operating a production system (for example, a production system 111) including a plurality of apparatuses and a robot system (for example, a robot system 187) including one or more robots for at least one apparatus among the plurality of apparatuses by a computer according to manufacturing method recipe data representing a ceramic manufacturing method recipe is a method according to one aspect for preparing a ceramic raw material at high speed.

A method according to any one of the other one or more aspects can also contribute to preparing the ceramic raw material at high speed. Specifically, for example, according to a method according to another aspect, mixing one or more types of ceramic raw materials, one or more grinding media, and a solvent in a container by a rotation-revolution mixer can contribute to preparing the ceramic raw materials at high speed. For example, merely adopting a wet mixing step as a step can contribute to preparing the ceramic raw material at high speed.

More specifically, for example, the plurality of steps may be the following five steps. One or more of the following five steps may be automatically performed by operating an apparatus by a robot. In the following description, a third container may be a second container, and the second container may be a heat-resistant container. A fourth container may be the third container or a container different from the third container. The fifth container may be the fourth container or a container different from the fourth container. A sixth container may be a container different from the fifth container.
(A) A weighing and mixing step of weighing each of one or more types of ceramic raw materials and a solvent, and putting one or more grinding media and the weighed one or more types of ceramic raw materials and the weighed solvent into a first container.
(B) A wet mixing step of wet-mixing the one or more types of ceramic raw materials in the second container containing the one or more types of ceramic raw materials, the solvent, and the one or more grinding media by a rotation-revolution mixer.
(C) A drying step of drying a slurry obtained by the wet mixing in the third container.
(D) A dry disintegration step of disintegrating the dried raw material in the fourth container.
(E) A grinding medium separation step of separating the one or more grinding media from the disintegrated raw material in the fifth container to obtain a ceramic powder in the sixth container.

For example, in the steps (B) to (E), a same heat-resistant container may be used without replacement, the rotation-revolution mixer may be used in the step (B), and a rotation-revolution mixer may be used in the step (D). The rotation-revolution mixer used in (B) and (D) may be the same rotation-revolution mixer.

### Reference Signs List

- 10: Material creation support system
- 100: MI platform system
- 111: Production system
- 187: Robot system

## Claims

1. A method for preparing a ceramic raw material, the method comprising:
a first step of putting each of one or more types of ceramic raw materials, one or more grinding media, and a solvent into a first container; and
a second step of mixing the one or more types of ceramic raw materials, the one or more grinding media, and the solvent put in a second container by a rotation-revolution mixer, wherein
the second container is the first container or a container different from the first container.

2. The method for preparing a ceramic raw material according to claim 1, the method comprising operating a production system including a plurality of apparatuses including the rotation-revolution mixer and a robot system including one or more robots for at least one apparatus among the plurality of apparatuses by a computer according to manufacturing method recipe data representing a ceramic manufacturing method recipe, thereby automatically performing at least one or more steps among a plurality of steps, which are for preparation of a ceramic raw material and include the first step and the second step.

3. A method for preparing a ceramic raw material, the method comprising:
operating a production system including a plurality of apparatuses and a robot system including one or more robots for at least one apparatus among the plurality of apparatuses by a computer according to manufacturing method recipe data representing a ceramic manufacturing method recipe, thereby automatically performing at least one or more steps among a plurality of steps for preparation of a ceramic raw material, wherein
the plurality of steps are five steps below:
(A) a weighing and mixing step of weighing each of one or more types of ceramic raw materials, a solvent, and a grinding medium, and putting the weighed one or more types of ceramic raw materials, the weighed solvent, and the weighed one or more grinding media into a first container;
(B) a wet mixing step of wet-mixing the one or more types of ceramic raw materials in a second container containing the one or more types of ceramic raw materials, the solvent, and the one or more grinding media;
(C) a drying step of drying a slurry obtained by the wet mixing in a third container;
(D) a dry disintegration step of disintegrating the dried raw material in a fourth container; and
(E) a grinding medium separation step of separating the one or more grinding media from the disintegrated raw material in a fifth container so as to obtain a ceramic powder in a sixth container,
the second container being the first container or a container different from the first container,
the second container being a heat-resistant container,
the third container being the second container,
the fourth container being the third container or a container different from the third container,
the fifth container being the fourth container or a container different from the fourth container,
the sixth container being a container different from the fifth container, and
in the drying step, the slurry and the grinding media in the heat-resistant container are dried together.

4. The method for preparing a ceramic raw material according to claim 3, wherein
in the dry disintegration step, the slurry is disintegrated by keeping using the heat-resistant container including the slurry and the grinding medium, which have been dried together.

5. The method for preparing a ceramic raw material according to claim 4, wherein
each of the second to fifth containers is the first container, and the first container is a heat-resistant container.

6. A method for preparing a ceramic raw material, the method comprising:
operating a production system including a plurality of apparatuses and a robot system including one or more robots for at least one apparatus among the plurality of apparatuses by a computer according to manufacturing method recipe data representing a ceramic manufacturing method recipe, thereby automatically performing at least one or more steps among a plurality of steps for preparation of a ceramic raw material, wherein
the plurality of steps are five steps below:
(A) a weighing and mixing step of weighing each of one or more types of ceramic raw materials, a solvent, and a grinding medium, and putting the weighed one or more types of ceramic raw materials, the weighed solvent, and the weighed one or more grinding media into a first container;
(B) a wet mixing step of wet-mixing the one or more types of ceramic raw materials in a second container containing the one or more types of ceramic raw materials, the solvent, and the one or more grinding media;
(C) a drying step of drying a slurry obtained by the wet mixing in a third container;
(D) a dry disintegration step of disintegrating the dried raw material in a fourth container; and
(E) a grinding medium separation step of separating the one or more grinding media from the disintegrated raw material in a fifth container so as to obtain a ceramic powder in a sixth container, and
each of the second to fifth containers is the first container, the first container is a heat-resistant container, and the sixth container is a container different from the first to fifth containers.

7. A method for preparing a ceramic raw material, the method comprising:
operating a production system including a plurality of apparatuses and a robot system including one or more robots for at least one apparatus among the plurality of apparatuses by a computer according to manufacturing method recipe data representing a ceramic manufacturing method recipe, thereby automatically performing at least one or more steps among a plurality of steps for preparation of a ceramic raw material, wherein
the plurality of steps are five steps below:
(A) a weighing and mixing step of weighing each of one or more types of ceramic raw materials, a solvent, and a grinding medium, and putting the weighed one or more types of ceramic raw materials, the weighed solvent, and the weighed one or more grinding media into a first container;
(B) a wet mixing step of wet-mixing the one or more types of ceramic raw materials in a second container containing the one or more types of ceramic raw materials, the solvent, and the one or more grinding media;
(C) a drying step of drying a slurry obtained by the wet mixing in a third container;
(D) a dry disintegration step of disintegrating the dried raw material in a fourth container; and
(E) a grinding medium separation step of separating the one or more grinding media from the disintegrated raw material in a fifth container so as to obtain a ceramic powder in a sixth container,
each of the second to fifth containers is the first container, the first container is a heat-resistant container, and the sixth container is a container different from the first to fifth containers, and
in the drying step, the slurry and the grinding media in the heat-resistant container are dried together.

8. A method for preparing a ceramic raw material, the method comprising:
operating a production system including a plurality of apparatuses and a robot system including one or more robots for at least one apparatus among the plurality of apparatuses by a computer according to manufacturing method recipe data representing a ceramic manufacturing method recipe, thereby automatically performing at least one or more steps among a plurality of steps for preparation of a ceramic raw material, wherein
the plurality of steps are five steps below:
(A) a weighing and mixing step of weighing each of one or more types of ceramic raw materials, a solvent, and a grinding medium, and putting the weighed one or more types of ceramic raw materials, the weighed solvent, and the weighed one or more grinding media into a first container;
(B) a wet mixing step of wet-mixing the one or more types of ceramic raw materials in a second container containing the one or more types of ceramic raw materials, the solvent, and the one or more grinding media;
(C) a drying step of drying a slurry obtained by the wet mixing in a third container;
(D) a dry disintegration step of disintegrating the dried raw material in a fourth container; and
(E) a grinding medium separation step of separating the one or more grinding media from the disintegrated raw material in a fifth container so as to obtain a ceramic powder in a sixth container,
the second container is the first container or a container different from the first container,
the third container is the second container or a container different from the second container,
the fourth container is the third container or a container different from the third container,
the fifth container is the fourth container or a container different from the fourth container,
the sixth container is a container different from the fifth container, and
at least one of a wet mixing apparatus used in the wet step or a disintegration apparatus used in the dry disintegration step is a rotation-revolution mixer.

9. The method for preparing a ceramic raw material according to claim 3, wherein
the plurality of apparatuses include an automatic weighing machine, a wet mixing apparatus, a dryer, and a disintegration apparatus,
in the weighing and mixing step, the heat-resistant container is set in the automatic weighing machine by the robot system, each of the one or more types of ceramic raw materials, the solvent, and the grinding medium are weighed, and the weighed one or more types of ceramic raw materials, the weighed solvent, and the weighed one or more grinding media are put into the heat-resistant container, by the automatic weighing machine according to one or more parameter values related to weighing and/or mixing included in the manufacturing method recipe, and the heat-resistant container is taken out from the automatic weighing machine by the robot system,
in the wet mixing step, the heat-resistant container taken out by the robot system in the weighing and mixing step is set in the wet mixing apparatus by the robot system, the one or more types of ceramic raw materials in the heat-resistant container are wet-mixed by the wet mixing apparatus according to one or more parameter values related to wet mixing included in the manufacturing method recipe, and the heat-resistant container is taken out from the wet mixing apparatus by the robot system,
in the drying step, the heat-resistant container taken out by the robot system in the wet mixing step is set in the dryer by the robot system, the slurry in the heat-resistant container is dried by the dryer according to one or more parameter values related to drying included in the manufacturing method recipe, and the heat-resistant container is taken out from the dryer by the robot system,
in the dry disintegration step, the heat-resistant container taken out by the robot system in the drying step is set in the disintegration apparatus by the robot system, the raw material in the heat-resistant container is disintegrated by the disintegration apparatus according to one or more parameter values related to dry disintegration included in the manufacturing method recipe, and the heat-resistant container is taken out from the disintegration apparatus by the robot system, and
in the grinding medium separation step, the heat-resistant container taken out by the robot system in the dry disintegration step is set by the robot system, and the one or more grinding media are separated from the disintegrated raw material in the heat-resistant container.

10. The method for preparing a ceramic raw material according to claim 6, wherein
the plurality of apparatuses include an automatic weighing machine, a wet mixing apparatus, a dryer, and a disintegration apparatus,
in the weighing and mixing step, the heat-resistant container is set in the automatic weighing machine by the robot system, each of the one or more types of ceramic raw materials, the solvent, and the grinding medium are weighed, and the weighed one or more types of ceramic raw materials, the weighed solvent, and the weighed one or more grinding media are put into the heat-resistant container, by the automatic weighing machine according to one or more parameter values related to weighing and/or mixing included in the manufacturing method recipe, and the heat-resistant container is taken out from the automatic weighing machine by the robot system,
in the wet mixing step, the heat-resistant container taken out by the robot system in the weighing and mixing step is set in the wet mixing apparatus by the robot system, the one or more types of ceramic raw materials in the heat-resistant container are wet-mixed by the wet mixing apparatus according to one or more parameter values related to wet mixing included in the manufacturing method recipe, and the heat-resistant container is taken out from the wet mixing apparatus by the robot system,
in the drying step, the heat-resistant container taken out by the robot system in the wet mixing step is set in the dryer by the robot system, the slurry in the heat-resistant container is dried by the dryer according to one or more parameter values related to drying included in the manufacturing method recipe, and the heat-resistant container is taken out from the dryer by the robot system,
in the dry disintegration step, the heat-resistant container taken out by the robot system in the drying step is set in the disintegration apparatus by the robot system, the raw material in the heat-resistant container is disintegrated by the disintegration apparatus according to one or more parameter values related to dry disintegration included in the manufacturing method recipe, and the heat-resistant container is taken out from the disintegration apparatus by the robot system, and
in the grinding medium separation step, the heat-resistant container taken out by the robot system in the dry disintegration step is set by the robot system, and the one or more grinding media are separated from the disintegrated raw material in the heat-resistant container.

11. A method for preparing a ceramic raw material, the method comprising:
operating a production system including a plurality of apparatuses and a robot system including one or more robots for at least one apparatus among the plurality of apparatuses by a computer according to manufacturing method recipe data representing a ceramic manufacturing method recipe, thereby automatically performing one or more steps among a plurality of steps for preparation of a ceramic raw material, wherein
the plurality of apparatuses include an automatic weighing machine, a wet mixing apparatus, a grinding medium slurry separation apparatus, a dryer, a pulverization apparatus, and a sieving apparatus,
the plurality of steps are six steps below:
(a) a weighing and mixing step of setting a first container in the automatic weighing machine by the robot system, weighing each of one or more types of ceramic raw materials, a solvent, and a grinding medium, and putting the weighed one or more types of ceramic raw materials, the weighed solvent, and the weighed one or more grinding media into the first container, by the automatic weighing machine according to one or more parameter values related to weighing and/or mixing included in the manufacturing method recipe, and taking out the first container from the automatic weighing machine by the robot system;
(b) a wet mixing step of setting a second container containing the one or more types of ceramic raw materials, the solvent, and the one or more grinding media in the wet mixing apparatus by the robot system, wet-mixing the second container containing the one or more types of ceramic raw materials, the solvent, and the one or more grinding media by the wet mixing apparatus according to one or more parameter values related to wet mixing included in the manufacturing method recipe, and taking out the second container from the wet mixing apparatus by the robot system;
(c) a grinding medium slurry separation step of setting a third container having the one or more grinding medium and a slurry obtained by wet mixing in the grinding medium slurry separation apparatus by the robot system, separating the one or more grinding media from the slurry according to one or more parameter values related to grinding medium slurry separation included in the manufacturing method recipe by the grinding medium slurry separation apparatus so as to obtain the slurry in a fourth container, and taking out the fourth container from the grinding medium slurry separation apparatus by the robot system;
(d) a drying step of setting a fifth container having the slurry in the dryer by the robot system, drying the slurry in the fifth container according to one or more parameter values related to drying included in the manufacturing method recipe by the dryer, and taking out the fifth container from the dryer by the robot system;
(e) a pulverization step of setting a sixth container having the dried raw material in the pulverization apparatus by the robot system, pulverizing the dried raw material according to one or more parameter values related to pulverization included in the manufacturing method recipe and a captured image of the raw material in the sixth container by the pulverization apparatus, and taking out the sixth container from the pulverization apparatus by the robot system; and
(f) a sieving step of setting a seventh container in the sieving apparatus by the robot system, and sieving the raw material according to one or more parameter values related to sieving included in the manufacturing method recipe and a captured image of the pulverized raw material so as to obtain a ceramic powder in the seventh container by the sieving apparatus,
the second container is the first container or a container different from the first container,
the third container is the second container or a container different from the second container,
the fourth container is a container different from the third container,
the fifth container is the fourth container or a container different from the fourth container,
the sixth container is a container different from the fifth container, and
the seventh container is a container different from the sixth container.

12. A system for preparing a ceramic raw material, the system comprising:
a production system including a plurality of apparatuses including a rotation-revolution mixer;
a robot system including one or more robots for at least one apparatus among the plurality of apparatuses; and
a computer system that operates the production system and the robot system according to manufacturing method recipe data representing a ceramic manufacturing method recipe, thereby performing one or more steps among a plurality of steps for preparing a ceramic raw material, wherein
the plurality of steps includes:
a first step of putting each of one or more types of ceramic raw materials, a grinding medium, and a solvent into a first container; and
second step of mixing the one or more types of ceramic raw materials, the grinding medium, and the solvent put in a second container by the rotation-revolution mixer, and
the second container is the first container or a container different from the first container.

13. A system for preparing a ceramic raw material, the system comprising:
a production system including a plurality of apparatuses;
a robot system including one or more robots for at least one apparatus among the plurality of apparatuses; and
a computer system that operates the production system and the robot system according to manufacturing method recipe data representing a ceramic manufacturing method recipe, thereby performing at least one or more steps among a plurality of steps for preparing a ceramic raw material, wherein
the plurality of apparatuses includes an automatic weighing machine, a wet mixing apparatus, a grinding medium slurry separation apparatus, a dryer, a pulverization apparatus, and a sieving apparatus,
the plurality of steps are six steps below:
(a) a weighing and mixing step of setting a first container in the automatic weighing machine by the robot system, weighing each of one or more types of ceramic raw materials, a solvent, and a grinding medium, and putting the weighed one or more types of ceramic raw materials, the weighed solvent, and the weighed one or more grinding media into the first container, by the automatic weighing machine according to one or more parameter values related to weighing and/or mixing included in the manufacturing method recipe, and taking out the first container from the automatic weighing machine by the robot system;
(b) a wet mixing step of setting a second container containing the one or more types of ceramic raw materials, the solvent, and the one or more grinding media in the wet mixing apparatus by the robot system, wet-mixing the second container containing the one or more types of ceramic raw materials, the solvent, and the one or more grinding media by the wet mixing apparatus according to one or more parameter values related to wet mixing included in the manufacturing method recipe, and taking out the second container from the wet mixing apparatus by the robot system;
(c) a grinding medium slurry separation step of setting a third container having the one or more grinding media and a slurry obtained by wet mixing in the grinding medium slurry separation apparatus by the robot system, separating the one or more grinding media from the slurry according to one or more parameter values related to grinding medium slurry separation included in the manufacturing method recipe by the grinding medium slurry separation apparatus so as to obtain the slurry in a fourth container, and taking out the fourth container from the grinding medium slurry separation apparatus by the robot system;
(d) a drying step of setting a fifth container having the slurry in the dryer by the robot system, drying the slurry in the fifth container according to one or more parameter values related to drying included in the manufacturing method recipe by the dryer, and taking out the fifth container from the dryer by the robot system;
(e) a pulverization step of setting a sixth container having the dried raw material in the pulverization apparatus by the robot system, pulverizing the dried raw material according to one or more parameter values related to pulverization included in the manufacturing method recipe and a captured image of the raw material in the sixth container by the pulverization apparatus, and taking out the sixth container from the pulverization apparatus by the robot system; and
(f) a sieving step of setting a seventh container in the sieving apparatus by the robot system, and sieving the raw material according to one or more parameter values related to sieving included in the manufacturing method recipe and a captured image of the pulverized raw material so as to obtain a ceramic powder in the seventh container by the sieving apparatus,
the second container is the first container or a container different from the first container,
the third container is the second container or a container different from the second container,
the fourth container is a container different from the third container,
the fifth container is the fourth container or a container different from the fourth container,
the sixth container is a container different from the fifth container, and
the seventh container is a container different from the sixth container.
